# EUROPÄISCHE PATENTSCHRIFT

(11) **EP 0 516 987 B1**
(45) Veröffentlichungstag und Bekanntmachung des Hinweises auf die Patenterteilung: **16.10.1996**
(21) Anmeldenummer: 92107608.9
(22) Anmeldetag: 06.05.1992
(51) Int. Cl.: C08F 22/04

(54) **Polymere auf der Basis von Bicyclo[2.2.1] hept-5-en-2,3-dicarbonsäure-anhydriden**
Polymers based on bicyclo(2.2.1) hept-5-en-2,3-dicarboxylic acid anhydride
Polymères à base de bicyclo(2.2.1) hept-5-en-2,3-anhydride d'acides dicarboxyliques

(30) Priorität: 28.05.1991 DE 4117369
(43) Veröffentlichungstag der Anmeldung: 09.12.1992
(73) Patentinhaber: BASF Aktiengesellschaft, 67063 Ludwigshafen (DE)
(72) Erfinder: Besecke, Siegmund, Dr., W-3250 Hameln (DE); Guentherberg, Norbert, Dr., W-6720 Speyer (DE)

(56) Entgegenhaltungen:
- POLYMER JOURNAL Bd. 6, Nr. 2, 1974, B.KAMO ET AL. 'RADICAL POLYMERIZATION OF FURAN WITH MALEIC ANHYDRIDE THROUGH THE DIELS-ALDER ADDUCT'

## Beschreibung

Die Erfindung betrifft statistische Copolymere aus
a) 5 bis 50 Gew.-% eines Bicyclo[2.2.1-]hept-5-en-2,3-dicarbonsäureanhydrides der allgemeinen Formel I (Monomere I) 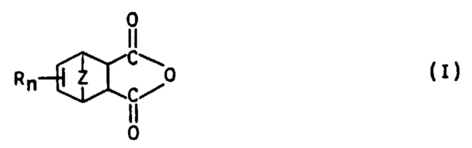 in der die Variablen folgende Bedeutung haben:
   - R: C₁-C₁₀-Alkyl oder C₁-C₁₀-Alkoxy, wobei der Alkyl- oder Alkoxyrest jeweils durch einen oder mehrere Sauerstoffatome unterbrochen sein kann, C₅-C₇-Cycloalkyl, einen ein- oder zweikernigen Aryl- oder Aryloxyrest, wobei der Aryl- oder Aryloxyrest jeweils seinerseits mit C₁-C₁₀-Alkylresten substituiert sein kann, C₁-C₁₀-Alkylaryl-, Cyano, Chlor, Brom, oder Reste der Formeln

   -CO-O-R¹

   -O-CO-R¹

   -CO-N(R¹)R²,

   wobei
   R¹ Wasserstoff, C₁-C₁₀-Alkyl, C₅-C₇-Cycloalkyl, einen ein- oder zweikernigen Arylrest, der seinerseits mit C₁-C₁₀-Alkylresten substituiert sein kann, C₁-C₁₀-Alkylaryl- und
   R² einen der Reste R¹ bezeichnen,
   - n: 0 bis 4, wobei die Reste R gleich oder verschieden voneinander sein können,
   - Z: Sauerstoff oder Schwefel
   und
b) 50 bis 95 Gew. -% Acrylsäure, Methacrylsäure, lineare und verzweigte Acrylsäureester der C₁- bis C₆ Alkohole, lineare und verzweigte Methacrylsäureester der C₁- bis C₆ Alkohole, Cyclohexylacrylat, Cyclohexylmethacrylat, Benzylacrylat, lineare und verzweigte Vinylester der C₂- bis C₆-Säuren, ungesättigte Nitrile, N-substituierte oder N,N-disubstituierte Acrylsäureamide, N-substituierte oder N,N-disubstituierte Methacrylsäureamide, oder Mischungen aus Styrol und Acrylnitril enthalten (Monomere II).

Speziell bezieht sich die Erfindung auf statistische Copolymere aus den unsubstituierten Stammverbindungen Ia als Monomeren I.

Weiterhin betrifft sie ein Verfahren zur Herstellung dieser Polymeren sowie deren Verwendung als thermoplastische Formmassen, z.B. zur Herstellung von Formkörpern und Flächengebilden, sowie Formkörper und Flächengebilde, die unter Verwendung dieser thermoplastischen Formmassen als wesentlichen Komponenten erhältlich sind.

Polymere mit linearem unvernetztem Aufbau lassen sich aufgrund ihrer Fliepeigenschaften im allgemeinen leicht zu Formkörpern verarbeiten. Häufig erweichen jedoch Formmassen aus diesen Polymeren schon bei relativ niedrigen Temperaturen, so daß sie für viele Anwendungsbereiche nur bedingt brauchbar sind.

Aus den US-A 3 330 815 und 4 012 572 sind Polymere aus Norbonenderivaten der allgemeinen Formel II 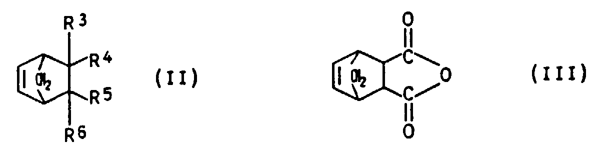 wobei die Reste R³ bis R⁶ neben anderen Bedeutungen auch für zwei Wasserstoffatome und einen Anhydridring stehen können (siehe Formel III), bekannt.

Weiterhin sind aus JP-A 01 311 112 temperaturstabile Polymere, die 7-Oxabicyclo[2.2.1]hept-5-en-2,3-dicarbonsäureimide (Formel IV) enthalten, bekannt.

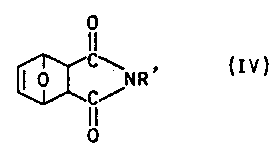

Diese Polymere sind jedoch wegen ihrer Imidfunktionen nicht farbstabil.

Die BE-A 863 454 betrifft Pfropfpolymere aus Polyolefinen und 7-Oxabicyclo[2.2.1]hept-5-en-2,3-dicarbonsäureanhydrid, die sich als Klebstoffe, nicht aber als thermoplastische Formmassen eignen.

Ferner werden in der US-A 3 954 913 Copolymere auf Basis von Acrylnitril und verwandten, Nitrilgruppen tragenden Monomeren beschrieben, welche bis zu 2 Gew.-% 7-Oxabicyclo[2.2.1]hept-5-en-2,3-dicarbonsäureanhydrid enthalten, um die polymeren Materialien farbbeständiger zu machen. Von höheren Anteilen an 7-Oxabicyclo[2.2.1]hept-5-en-2,3-dicarbonsäureanhydrid wird in dieser Patentschrift abgeraten.

Polymer Journal Vol. 6, No. 2, 1974, Seiten 121-131 beschreibt Homopolymere aus 7-Oxa-bicyclo[2.2.1-]hept-5-en-2,3-dicarbonsäureanhydrid mit Molekulargewichten bis 10 000 sowie ein Verfahren zu seiner Herstellung durch Lösungspolymerisation.

Der vorliegenden Erfindung lagen Polymere als Aufgabe zugrunde, die eine hohe Wärmeformbeständigkeit bei gleichzeitig gutem Fließverhalten aufweisen und die farbstabil sind.

Demgemäß wurden die eingangs definierten Polymeren gefunden.

Erfindungsgemäß enthalten die Polymeren 5 bis 50 Gew.-% an Monomeren I, deren Stammverbindungen 7-Oxa- und 7-Sulfobicyclo[2.2.1]hept-5-en-2,3-dicarbonsäureanhydrid (Ia) sind. Vorzugsweise enthalten die Polymere 10 bis 50, insbesondere 10 bis 30 Gew.-% an Monomeren I bzw. Ia.

Die Monomeren I sind an sich bekannt oder in bekannter Weise erhältlich, z.B. durch Diels-Alder-Reaktionen aus den entsprechend substituierten Maleinsäureanhydriden und Furan, Furanderivaten oder den entsprechenden Thiophenverbindungen (z.B.: Beilstein, Handbuch der organischen Chemie E II 19, S. 181; E III/IV 19, S. 1964 f; E V 19/5, S 69f). Die Reaktionsbedingungen der Umsetzungen, die zu den jeweiligen Monomeren I führen, entsprechen im allgemeinen denjenigen, wie sie in der Diels-Alder-Chemie üblich sind. Einen überblick über diverse Reaktionsbedingungen bieten z.B. G. Brieger, J.N. Bennett: Chem. Rev. 80, 63-97 (1980) und A. Wassermann: "Diels-Alder-Reactions", American Elsevier, New York (1965).

Als Monomere I kommen vor allem die unsubstituierten Stammverbindungen Ia in Betracht. Weiterhin geeignete Monomere dieser Klasse sind die definitionsgemäßen Verbindungen, die bis zu vier Substituenten R tragen können und zwar vorzugsweise in den 1 und 2 Stellungen. Als Substituenten, die gleich oder verschieden voneinander sein können, seien genannt C₁-C₁₀-Alkylgruppen, besonders C₁-C₄-Alkylgruppen wie Ethyl-, Propyl-, Butyl- und vor allem die Methylgruppe, C₁-C₁₀-Alkylgruppen, die mit einem oder mehreren Sauerstoffatomen unterbrochen sein können, besonders -CH₂OCH₃, C₁-C₁₀-Alkoxygruppen, besonders C₁-C₄-Alkoxygruppen wie Ethoxy-, Propoxy-, Butoxy- und insbesondere die Methoxygruppe, C₁-C₁₀-Alkoxygruppen, die mit einem oder mehreren Sauerstoffatomen unterbrochen sein können, wie -OCH₂CH₂OCH₃, C₅-C₇-Cycloalkylgruppen wie Cyclopentyl-, Cyclohexyl- und die Cycloheptylgruppe, ein- oder zweikernige Arylgruppen, die ihrerseits mit C₁-C₁₀-Alkylresten substituiert sein können, darunter Naphthyl-, vorzugsweise Phenyl- und Tolyl-, C₁-C₁₀-Alkylaryl, besonders die Benzylgruppe, Cyano, Chlor sowie Brom. Außerdem können die Substituenten R Säure-, Ester- oder Amidgruppen der Formeln -CO-O-R¹, -O-CO-R¹, -CO-N(R¹)R² sein. Hierbei kann R¹ Wasserstoff, eine C₁-C₁₀-Alkylgruppe, insbesondere C₁-C₄-Alkylgruppe wie Ethyl-, Propyl-, Butyl-, vorzugsweise eine Methylgruppe, C₅-C₇-Cycloalkylgruppe wie Cyclopentyl- und Cyclohexyl-, Cycloheptylgruppe, ein ein- oder zweikerniger Arylrest, der seinerseits mit C₁-C₁₀-Alkylresten substituiert sein kann, wie Naphthyl, vor allem Phenyl- und Tolyl-, eine C₁-C₁₀-Alkylarylgruppe, besonders eine Benzylgruppe sein. R² ist ein aus der Gruppe R¹ ausgewählter Rest, insbesondere Wasserstoff, eine C₁-C₄-Alkylgruppe, vorzugsweise eine Methylgruppe. Das Heterobrückenatom Z ist entweder Schwefel oder bevorzugterweise Sauerstoff.

Beispiele substituierter Monomerer sind:

1-Methyl-7-oxabicyclo[2.2,1]hept-5-en-2,3-dicarbonsäureanhydrid 1,4-Dimethyl-7-oxabicyclo[2.2.1]hept-5-en-2,3-dicarbonsäureanhydrid 1,4-Diethyl-7-oxabicyclo[2.2.1]hept-5-en-2,3-dicarbonsäureanhydrid 1-Methoxy-7-oxabicyclo[2.2.1]hept-5-en-2,3-dicarbonsäureanhydrid 1-Methoxy-4-methyl-7-oxabicyclo[2.2.1]hept-5-en-2,3-dicarbonsäureanhydrid 1-Phenyl-7-oxabicyclo[2.2.1]hept-5-en-2,3-dicarbonsäureanhydrid 1-Phenoxy-7-oxabicyclo[2.2,1]hept-5-en-2,3-dicarbonsäureanhydrid 1-Benzyl-7-oxabicyclo[2.2.1]hept-5-en-2,3-dicarbonsäureanhydrid 2-Chlor-7-oxabicyclo[2.2.1]hept-5-en-2,3-dicarbonsäureanhydrid 1-Acetyl-7-oxabicyclo[2.2.1]hept-5-en-2,3-dicarbonsäureanhydrid.

Selbstverständlich können auch Gemische verschiedener der vorgenannten Monomeren eingesetzt werden. Ebenso können sowohl stereochemisch einheitliche als auch Mischungen verschiedener Stereoisomerer verwendet werden.

Die Monomeren I oder Gemische unterschiedlicher Monomerer des Typs I lassen sich mit den Monomeren II, copolymerisieren. Dabei enthalten die Polymere 50 bis 95, insbesondere 70 bis 95 Gew.-% an mit den Monomeren I verträglichen Monomeren II.

Als Monomere II kommen Mischungen aus Styrol und Acrylnitril in Betracht.

Außerdem eignen sich Acrylsäure, Methacrylsäure, lineare und verzweigte Acrylsäureester der C₁-C₆ Alkohole wie Methylacrylat, Ethylacrylat, Propylacrylat, Butylacrylat, Isobutylacrylat, Amylacrylat, Hexylacrylat; lineare und verzweigte Methacrylsäureester der C₁-C₆-Alkohole, wie Methylmethacrylat, Ethylmethacrylat, Propylmethacrylat, Butylmethacrylat, Isobutylmethacrylat, Hexylmethacrylat; Cyclohexylacrylat und seine Derivate wie Cyclohexylmethacrylat sowie Benzylacrylat. Besonders bevorzugt wird Methylmethacrylat eingesetzt.

Daneben eignen sich linear- oder verzweigtkettige Vinylester der C₂-C₆-Säuren, z.B. Vinylacetat, Vinylpropionat, Vinylbutyrat, Vinylvalerat, Vinylhexanoat, wobei Vinylacetat besonders vorteilhaft ist.

Die erfindungsgemäßen Polymeren können auch ungesättigte Nitrile als comonomere Bausteine enthalten. Dazu zählen Acrylnitril, Methacrylnitril, 2-Cyano-1-buten. Die bevorzugten Nitrile sind Acrylnitril und Methacrylnitril.

N-substituierte oder N,N-disubstituierte Acryl- und Methacrylsäureamide sind ebenfalls einsetzbar. Typische Vertreter sind N-C₁-C₁₀-alkyl substituierte Acrylsäureamide, deren N-C₁-C₁₀-alkylreste linear oder verzweigt sein können, wie N-methylacrylamid, N-methylmethacrylamid, N-octylacrylamid, N-isopropylacrylamid, N-(2,4,4-trimethylpentyl)acrylamid und N,N-C₁-C₄-alkyl disubstituierte Acrylsäureamide wie N,N-dimethylacrylamid und N,N-di-n-butylacrylamid.

Die Herstellung der definitionsgemäßen Polymeren erfolgt in an sich bekannter Weise durch radikalische Polymerisation, bevorzugt unter Inertgasbedingungen. Die Radikalreaktion kann entweder chemisch, thermisch oder durch UV-Licht initiiert werden, wobei ein rein thermischer Start dann z.B. bevorzugt ausgeführt wird, wenn das Monomere II Styrol ist.

Vorzugsweise polymerisiert man in einem Temperaturbereich von 25 bis 150°C. Der bevorzugte Temperaturbereich liegt zwischen etwa 50 und 130°C. Dabei hat es sich als zweckmäßig erwiesen, die Temperatur in der Startphase niedriger als etwa 75°C zu halten. Sollen stereochemisch einheitliche polymere Produkte hergestellt werden, ist es zweckmäßig, bei möglichst tiefen Temperaturen zu arbeiten. In der Regel ist die Polymerisation nach 4 bis 40 Stunden beendet.

Als Radikalstarter kommen Peroxy- und Azoverbindungen in Betracht. Dabei kann es vorteilhaft sein, eine Radikalstartermischung zu verwenden, deren Aktivität aufgrund der unterschiedlichen Stabilität ihrer Komponenten temperaturabhängig ist.

Typische Beispiele für Initiatoren, deren Zerfallstemperaturen bei ca. 50°C liegen, sind
2,2'-Azobis(4-methoxy-2,4-dimethylvaleronitril),
2,2'-Azobis(2,4-dimethylvaleronitril),
t-Butylperoxyneodecanoat und
t-Butylperoxyisononat.

Zu den bei höheren Temperaturen zerfallenden Radikalstartern zählen
t-Butylcumylperoxid,
1,1-Bis(t-butylperoxy)3,3,5-trimethylcyclohexan,
1,1-Bis(t-butylperoxy)cyclohexan,
t-Butylperoxymaleinsäure,
t-Butylperoxylaurat,
t-Butylperoxy-3,3,5-trimethylhexanoat,
t-Butylperoxyacetat,
2,2-Bis(t-butylperoxy)butan,
t-Butylperoxybenzoat,
n-Butyl-4,4-bis(t-butylperoxy)valerat,
Di-t-butyldiperoxyisophthalat,
2-Butanonperoxid
Bis(t-butylperoxyisopropyl)benzol,
Dicumylperoxid,
2,5-Dimethyl-2,5-di(t-butylperoxy)hexan,
t-Butylperoxyisobutyrat,
Laurylperoxid,
1,1'-Azabis(cyclohexan-1-carbonitril),
4-Methyl-2-pentanonperoxid,
1,1-Bis(butylperoxy)3,3,5-trimethylcyclohexan,
1,1-Bis(butylperoxy)cyclohexan,
Di-t-butylperoxid
Tris(t-butylperoxy)triazin.

Bevorzugt werden t-Butylperoxyisononat und Di-t-butylperoxid eingesetzt.

Vorzugsweise verwendet man die Radikalstarter in Mengen von 0,01 bis 2 Gew.-%, besonders von 0,03 bis 0,5 Gew.-%, bezogen auf die Gesamtmenge der Monomeren I und II.

Zur Einstellung des Molekulargewichtes und um ein einheitliches Molekulargewicht zu erzielen, können z.B. schwefelhaltige Regler eingesetzt werden. Geeignet sind Thiole, Mercaptane wie n- oder t-Alkylmercaptane, Cyclohexylmercaptane oder Benzylmercaptan. Weiterhin sind Thiosalicylsäure, Thioglycolsäure, deren Salze oder Ester sowie Mercaptanpropionsäure und deren Ester zu nennen.

Die erfindungsgemäßen Polymeren können in an sich bekannter Weise nach den Methoden der Substanz-, Lösungs-, Suspensions- oder Emulsionspolymerisation hergestellt werden.

In Betracht kommende Dispergiermittel sind z.B. Alkylbenzolsulfonate, sulfonierte Alkohole auch in Gegenwart von Polyglycolethern oder Polyglycolestern (s. z.B. Ullmann's Encyclopedia of Technical Chemistry, Verlag Chemie Weinheim, Vol. A8, p. 577 (1987)).

Bevorzugt findet die Polymerisation in Substanz oder in Lösung statt. Es eignen sich polare aprotische Lösungsmittel, darunter 2-Butanon, 2-Pentanon, Acetophenon, Tetrahydrofuran, N,N-Dimethylformamid, aber auch Benzol, Toluol oder Ethylbenzol, sowie Carbonsäureester z.B. Essigsäureethylester oder Essigsäureisopropylester.

Die erfindungsgemäßen Polymeren haben Glastemperaturen, die in aller Regel höher als ca. 100°C, insbesondere aber höher als etwa 120°C liegen, und die sich im allgemeinen erst oberhalb von etwa 300°C zersetzen. Die Molekulargewichte der erfindungsgemäßen Polymeren liegen im allgemeinen im Bereich von 5000 bis 500 000. Bevorzugt werden Polymere mit mittleren Molekulargewichten von 50 000 bis 200 000.

Gewünschtenfalls können die Polymeren in der üblichen Weise mit Verstärkungsmitteln und Zusatzstoffe versehen werden. Bezogen auf die Gesamtmenge der Monomeren I und II können diese in Mengen bis zu etwa 20 Gew.-%, vorzugsweise etwa 10 Gew.-% zugegeben werden.

Typische Füll- oder Verstärkungsmaterialien sind Glasfasern, Glaskugeln amorphe Kieselsäure, gepulverter Quarz, Glimmer, Talkum, Wollastonit, Kaolin, und Kreide.

Oxidations- und Wärmestabilisatoren, die den Polymeren zugesetzt werden können, sind z.B. sterisch gehinderte Phenole, Phosphite und Phosphonite wie Octadecyl-3-(3,5-di-t-butyl-4-hydroxyphenyl)-propionat, Tris(2,4-di-t-butylphenyl)-phosphit.

Beispiele für UV-Stabilisatoren sind verschieden substituierte Rescorcine, Salicylate, Benzotriazole, Benzophenone und sterisch gehinderte Amine.

Die erfindungsgemäßen Polymere können durch Pigmente aller Art eingefärbt werden.

Gewünschtenfalls können Gleit- und Entformungsmittel mitverwendet werden. Zu diesen zählen Silikonöle, Stearinsäure, Stearlyalkohol, Stearinsäurealkylester, sowie Ester des Pentaerythrits mit langkettigen Fettsäuren.

Um elektrostatische Aufladung zu vermeiden, können auch elektrisch leitfähige Materialien mitverwendet werden. Zu dieser Materialgruppe gehören z.B. organische Leiter und salzartige Verbindungen wie Natriumalkylsulfonate.

Ferner seien als Zusatzstoffe Flammschutzmittel genannt. Als solche sind Phosphor und seine Derivate wie Phosphorsäurealkylester oder Phosphinoxid besonders geeignet. Gute Flammhemmung wird mit Triarylphosphaten und Triarylphosphinoxiden, insbesondere Triphenylphosphat oder Triphosphinoxid erzielt. Daneben können auch Verbindungen, die Phosphor-Stickstoff-Bindungen enthalten, als entflammungshemmende Additive dienen.

Die erfindungsgemäßen Polymeren weisen eine gute Wärmeformbeständigkeit auf. Sie zeichnen sich durch Fliepfähigkeit, Farbstabilität und hohe Transparenz aus.

Aufgrund ihrer thermoplastischen Eigenschaften können die erfindungsgemäßen Polymere in gebräuchlichen Verfahren z.B. Spritzguß oder Extrusionsverfahren als thermoplastische Formmassen der Herstellung von Formkörpern dienen. Diese finden z.B. als Kfz.-Teile, Sportgeräte oder Gerätebauteile auf dem Elektrosektor ihre Anwendung.

### Beispiele

Jeweils 26 g einer Monomerenmischung mit der in der Tabelle angegebenen Monomerzusammensetzung wurden in Lösung in 80 g Tetrahydrofuran in Gegenwart von 0,026 g Dilaurylperoxid und 0,052 g t-Butylperpivalat im Laufe von 9 Stunden bei 60°C unter N₂-Atmosphäre polymerisiert. Anschließend wurde das Polymere mit Hexan ausgefällt und danach getrocknet.

Die Glastemperaturen (Tg) wurden mittels Differential-Scanning-Calorimetrie bestimmt. Die Messungen erfolgten in einem Temperaturbereich von 50 bis 250°C und bei einer Aufheizrate von 20°C/Min.

Mittels thermogravimetrischer Analyse wurden die Zersetzungstemperaturen (Tzₜ) und die 2%-Gewichtsverlust-Werte (Tz₂) bestimmt. Die Messungen erfolgten in einem Temperaturbereich von 50 bis 500°C und bei einer Aufheizrate von 20°C/Min.

Die jeweiligen Zusammensetzungen sowie die Ergebnisse sind der folgenden Tabelle zu entnehmen:

**Tabelle**

| Beispiel | Monomerzusammensetzung | | | | Polymereigenschaften | | |
|---|---|---|---|---|---|---|---|
| | Monomer Ia^{*} | Monomer II | | | Tg | Tz₂ | Tzₜ |
| | [Gew.-%] | MMA¹⁾ [Gew.-%] | Styrol [Gew.-%] | AN | [°C] | [°C] | [°C] |
| 1V²⁾ | - | 100 | - | - | 107 | 234 | 250 |
| 1 | 23 | 77 | - | - | 117 | 263 | 303 |
| 2V²⁾ | - | - | 100 | - | 105 | 328 | 392 |
| 2 | 12 | - | 66 | 22 | 120 | 340 | 395 |

| | | | | | | | |
|---|---|---|---|---|---|---|---|
| 1)Methylmethacrylat | | | | | | | |
| ²⁾ Vergleichsbeispiel | | | | | | | |
| ^{*} Monomer Ia : 7-Oxobicyclo[2.2.1]-hept-5-en-2, 3 dicarbonsäureanhydrid | | | | | | | |

## Patentansprüche

1. Statistische Copolymere aus
a) 5 bis 50 Gew.-% eines Bicyclo[2.2.1-]hept-5-en-2,3-dicarbonsäureanhydrides der allgemeinen Formel I (Monomere I) 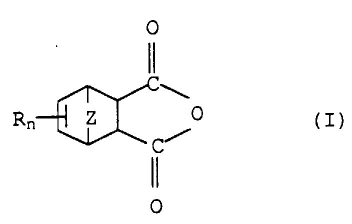 in der die Variablen folgende Bedeutung haben:
R C₁-C₁₀-Alkyl oder C₁-C₁₀-Alkoxy, wobei der Alkyl- oder Alkoxyrest jeweils durch einen oder mehrere Sauerstoffatome unterbrochen sein kann, C₅-C₇-Cycloalkyl, einen ein- oder zweikernigen Aryl- oder Aryloxyrest, wobei der Aryl- oder Aryloxyrest jeweils seinerseits mit C₁-C₁₀-Alkylresten substituiert sein kann, C₁-C₁₀-Alkylaryl-, Cyano, Chlor, Brom oder Reste der Formeln
-CO-O-R¹
-O-CO-R¹
-CO-N(R¹)R²,
wobei
R¹ Wasserstoff, C₁-C₁₀-Alkyl, C₅-C₇-Cycloalkyl, einen ein- oder zweikernigen Arylrest, der seinerseits mit C₁-C₁₀-Alkylresten substituiert sein kann, C₁-C₁₀-Alkylaryl und
R² einen der Reste R¹ bezeichnen
n 0 bis 4, wobei die Reste R gleich oder verschieden voneinander sein können,
Z Sauerstoff oder Schwefel
und
b) 50 bis 95 Gew.-% Acrylsäure, Methacrylsäure, lineare und verzweigte Acrylsäureester der C₁-C₆ Alkohole, lineare und verzweigte Methacrylsäureester der C₁-C₆ Alkohole Cyclohexylacrylat, Cyclohexylmethacrylat, Benzylacrylat, lineare und verzweigte, Vinylester der C₂- bis C₆-Säuren, ungesättigte Nitrile, N-substituierte oder N,N-disubstituierte Acrylsäureamide, N-substituierte oder N,N-disubstituierte Methacrylsäureamide, oder Mischungen aus Styrol und Acrylnitril enthalten (Monomere II).

2. Polymere nach Anspruch 1 aus den unsubstituierten Verbindungen Ia 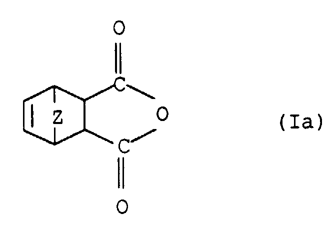 als Monomere I.

3. Polymere nach den Ansprüchen 1 oder 2 aus
a) 5 bis 50 Gew.-% der Monomeren I und
b) 50 bis 95 Gew.-% Acrylnitril, Methylmethacrylat oder Mischungen aus Styrol und Acrylnitril als Monomere II.

4. Polymere nach den Ansprüchen 1 bis 3, aus
a) 5 bis 30 Gew.-% eines Monomeren Ia und
b) 70 bis 95 Gew.-% Methylmethacrylat oder Mischungen aus Styrol und Acrylnitril als Monomere II.

5. Verfahren zur Herstellung statistischer Copolymerer durch radikalische Polymerisation von olefinisch ungesättigten Monomeren in an sich bekannter Weise, dadurch gekennzeichnet, daß man hierzu von folgenden Monomeren ausgeht:
a) 5 bis 50 Gew.-% eines Bicyclo[2.2.1]hept-5-en-2,3-dicarbonsäureanhydrides der allgemeinen Formel I (Monomere I) 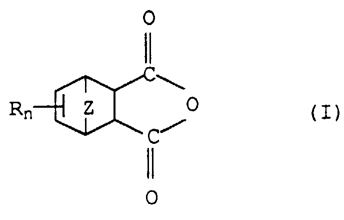 in der die Variablen folgende Bedeutung haben:
R C₁-C₁₀-Alkyl, C₅-C₇-Cycloalkyl, einen ein- oder zweikernigen Arylrest der seinerseits mit C₁-C₁₀-Alkylresten substituiert sein kann, Cyano, Chlor, Brom, C₁-C₁₀-Alkoxy oder Reste der Formeln
-CO-O-R¹
-O-CO-R¹
-CO-N(R¹)R²,
wobei
R¹ Wasserstoff, C₁-C₁₀-Alkyl, C₅-C₇-Cycloalkyl, einen ein- oder zweikernigen Arylrest, der seinerseits mit C₁-C₁₀-Alkylresten substituiert sein kann und
R² einen der Reste R¹ bezeichnen,
n 0 bis 4, wobei die Reste R gleich oder verschieden voneinander sein können,
Z Sauerstoff oder Schwefel
und
b) 50 bis 95 Gew.-% Acrylsäure, Methacrylsäure, lineare und verzweigte Acrylsäure ester der C₁- bis C₆-Alkohole, lineare und verzweigte Methacrylsäureester der C₁- bis C₆-Alkohole Cyclohexylacrylat, Cyclohexylmethacrylat, Benzylacrylat, lineare und verzweigte Vinylester der C₂- bis C₆-Säuren, ungesättigte Nitrile, N-substituierte oder N,N-disubstituierte Acrylsäureamide, N-substituierte oder N,N-disubstituierte Methacrylsäureamide, oder Mischungen aus Styrol und Acrylnitril enthalten (Monomere II).

6. Verwendung der Polymeren gemäß den Ansprüchen 1 bis 4 als thermoplastische Formmassen für die Herstellung von Formkörpern und Flächengebilden.

7. Formkörper und Flächengebilde aus den Polymeren gemäß den Ansprüchen 1 bis 4.

## Claims

1. A random copolymer composed of
a) from 5 to 50 % by weight of a bicyclo[2.2.1]hept-5-ene-2,3-dicarboxylic anhydride of the general formula I (monomers I), 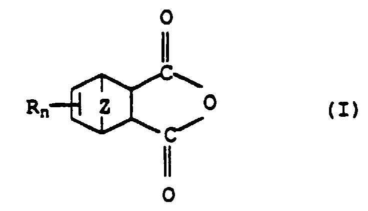 where
R is C₁-C₁₀-alkyl or C₁-C₁₀-alkoxy, each of which can be interrupted by one or more oxygen atoms, or is C₅-C₇-cycloalkyl, a mono- or binuclear aryl or aryloxy radical, each of which in turn may be substituted by C₁-C₁₀-alkyl, or is C₁-C₁₀-alkylaryl, cyano, chlorine, bromine or a radical of the formula
-CO-O-R¹,
-O-CO-R¹ or
-CO-N-(R¹)R²,
where
R¹ is hydrogen, C₁-C₁₀-alkyl, C₅-C₇-cycloalkyl, a mono- or binuclear aryl radical which in turn may be substituted by C₁-C₁₀-alkyl, or is C₁-C₁₀-alkylaryl and
_{R}2 is one of the radicals R¹,
n is from 0 to 4, it being possible for the radicals R to be identical or different,
Z is oxygen or sulphur,
and
b) from 50 to 95 % by weight of acrylic acid, methacrylic acid, linear or branched esters of acrylic acid with C₁-C₆ alcohols, linear or branched esters of methacrylic acid with C₁-C₆-alcohols, cyclohexyl acrylate, cyclohexyl methacrylate, benzyl acrylate, linear or branched vinyl esters of C₂-C₆-acids, unsaturated nitriles, N-substituted or N,N-disubstituted acrylamides, N-substituted or N,N-disubstituted methyacrylamides or mixtures of styrene and acrylonitrile (monomers II).

2. A polymer as claimed in claim 1, composed of the unsubstituted compounds Ia 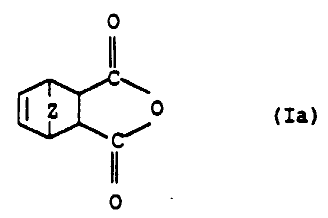 as monomers I.

3. A polymer as claimed in claim 1 or 2, composed of
a) from 5 to 50 % by weight of the monomers I and
b) from 50 to 95 % by weight of acrylonitrile, methyl methacrylate or a mixture of styrene and acrylonitrile as monomers II.

4. A polymer as claimed in any of claims 1 to 3, composed of
a) from 5 to 30 % by weight of a monomer Ia and
b) from 70 to 95 % by weight of methyl methacrylate or a mixture of styrene and acrylonitrile as monomers II.

5. A process for the preparation of random copolymers by free radical polymerization of olefinically unsaturated monomers in a manner known per se, wherein the following monomers are used as starting material for this purpose:
a) from 5 to 50 % by weight of a bicyclo[2.2.1]hept-5-ene-2,3-dicarboxylic anhydride of the general formula I (monomers I) 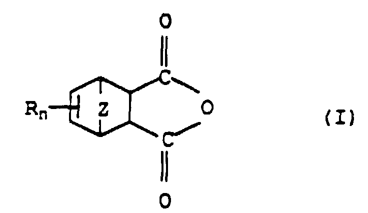 where
R is C₁-C₁₀-alkyl, C₅-C₇-cycloalkyl or a mono- or binuclear aryl radical which in turn may be substituted by C₁-C₁₀-alkyl, or is cyano, chlorine, bromine, C₁-C₁₀-alkoxy or a radical of the formula
-CO-O-R¹,
-O-CO-R¹ or
-CO-N(R¹)R²,
where
R¹ is hydrogen, C₁-C₁₀-alkyl, C₅-C₇-cycloalkyl or a mono- or binuclear aryl radical which in turn may be substituted by C₁-C₁₀-alkyl and
R² is one of the radicals R¹,
n is from 0 to 4, it being possible for the radicals R to be identical or different, and
Z is oxygen or sulphur,
and
b) from 50 to 95 % by weight of acrylic acid, methacrylic acid, linear or branched esters of acrylic acid with C₁-C₆-alcohols, linear or branched esters of methacrylic acid with C₁-C₆-alcohols, cyclohexyl acrylate, cyclohexyl methacrylate, benzyl acrylate, linear or branched vinyl esters of C₂-C₆-acids, unsaturated nitriles, N-substituted or N,N-disubstituted acrylamides, N-substituted or N,N-disubstituted methacrylamides or mixtures of styrene and acrylonitrile (monomers II).

6. Use of a polymer as claimed in any of claims 1 to 4 as thermoplastic moulding materials for the production of mouldings and sheet-like structures.

7. A moulding or sheet-like structure comprising a polymer as claimed in any of claims 1 to 4.

## Revendications

1. Copolymères statistiques de
a) 5 à 50% en poids d'un anhydride d'acide bicyclo[2.2.1-]hept-5-ène-2,3-dicarboxylique de formule générale I (monomères I) 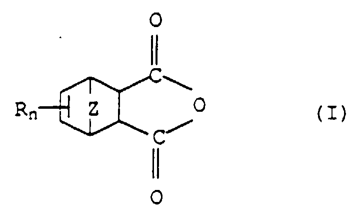 dans laquelle les variables ont les significations suivantes:
R reste alkyle en C₁-C₁₀ ou alcoxy en C₁-C₁₀ (chaque reste alkyle ou alcoxy pouvant être interrompu par un ou plusieurs atomes d'oxygène), cycloalkyle en C₅-C₇, aryle ou aryloxy à un ou deux noyaux (chaque reste aryle ou aryloxy pouvant être substitué de son côté par des restes alkyle en C₁-C₁₀), (alkyl en C₁-C₁₀)aryle, cyano, atome de chlore ou de brome ou reste de formule
-CO-O-R¹,
-O-CO-R¹ ou
-CO-N(R¹)R²,
où
R¹ représente un atome d'hydrogène, un reste alkyle en C₁-C₁₀, cycloalkyle en C₅-C₇, aryle à un ou deux noyaux (qui peut être substitué de son côté par des restes alkyle en C₁-C₁₀), (alkyl en C₁-C₁₀)aryle, et
R² représente l'un des restes R¹,
n 0 à 4, les restes R pouvant être identiques ou différents les uns des autres,
Z atome d'oxygène ou de soufre,
et
b) 50 à 95% en poids d'acide acrylique, d'acide méthacrylique, d'esters linéaires et ramifiés de l'acide acrylique et des alcools en C₁-C₆, d'esters linéaires et ramifiés de l'acide méthacrylique et des alcools en C₁-C₆, d'acrylate de cyclohexyle, de méthacrylate de cyclohexyle, d'acrylate de benzyle, d'esters vinyliques linéaires et ramifiés des acides en C₂-C₆, de nitriles insaturés, d'amides d'acide acrylique N-substitués ou N,N-disubstitués, d'amides d'acide méthacrylique N-substitués ou N,N-disubstitués, ou de mélanges de styrène et d'acrylonitrile (monomères II).

2. Polymères selon la revendication 1, formés à partir des composés non substitués Ia 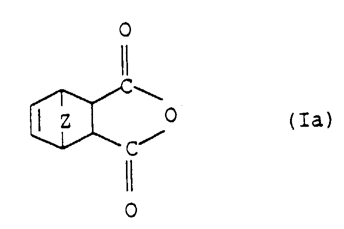 en tant que monomères I.

3. Polymères selon la revendication 1 ou 2, formés à partir de
a) 5 à 50% en poids des monomères I et
b) 50 à 95% en poids d'acrylonitrile, de méthacrylate de méthyle ou de mélanges de styrène et d'acrylonitrile en tant que monomères II.

4. Polymères selon l'une quelconque des revendications 1 à 3, formés à partir de
a) 5 à 30% en poids d'un monomère la et
b) 70 à 95% en poids de méthacrylate de méthyle ou de mélanges de styrène et d'acrylonitrile en tant que monomères II.

5. Procédé de préparation de copolymères statistiques par polymérisation radicalaire de monomères à insaturation oléfinique de façon connue en soi, caractérisé en ce que l'on part à cette fin des monomères suivants:
a) 5 à 50% en poids d'un anhydride d'acide bicyclo[2.2.1]hept-5-ène-2,3-dicarboxylique de formule générale I (monomères I) 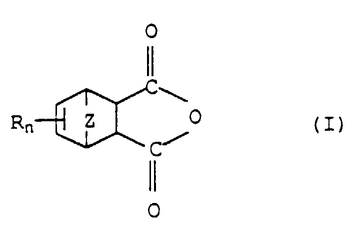 dans laquelle les variables ont les significations suivantes:
R reste alkyle en C₁-C₁₀, cycloalkyle en C₅-C₇, aryle à un ou deux noyaux qui peut être substitué de son côté par des restes alkyle en C₁-C₁₀, cyano, atome de chlore ou de brome, reste alcoxy en C₁-C₁₀ ou restes de formules
-CO-O-R¹,
-O-CO-R¹ ou
-CO-N(R¹)R²,
où
R¹ représente un atome d'hydrogène, un reste alkyle en C₁-C₁₀, cycloalkyle en C₅-C₇, aryle à un ou deux noyaux qui peut être substitué de son côté par des restes alkyle en C₁-C₁₀,
et
R² représente l'un des restes R¹,
n 0 à 4, les restes R pouvant être identiques au différents les uns des autres,
Z atome d'oxygène ou de soufre,
et
b) 50 à 95% en poids d'acide acrylique, d'acide méthacrylique, d'esters linéaires et ramifiés de l'acide acrylique et des alcools en C₁-C₆, d'esters linéaires et ramifiés de l'acide méthacrylique et des alcools en C₁-C₆, d'acrylate de cyclohexyle, de méthacrylate de cyclohexyle, d'acrylate de benzyle, d'esters vinyliques linéaires et ramifiés des acides en C₂-C₆, de nitriles insaturés, d'amides d'acide acrylique N-substitués ou N,N-disubstitués, d'amides d'acide méthacrylique N-substitués ou N,N-disubstitués, ou de mélanges de styrène et d'acrylonitrile (monomères II).

6. Utilisation des polymères selon l'une quelconque des revendications 1 à 4 comme masses à mouler thermoplastiques pour la fabrication de corps moulés et d'objets en nappe.

7. Corps moulés et objets en nappe, composés des polymères selon l'une quelconque des revendications 1 à 4.
